# EUROPEAN PATENT APPLICATION

(11) **EP 4 765 265 A1**
(43) Date of publication of application: **24.06.2026**
(21) Application number: 25217234.1
(22) Date of filing: 20.11.2025
(51) Int. Cl.: H01M 10/04, H01M 50/00

(54) **ELECTRODE ASSEMBLY, METHOD FOR MANUFACTURING THE SAME, AND RECHARGEABLE BATTERY**

(30) Priority: 17.12.2024 KR 20240187806
(71) Applicant: SAMSUNG SDI CO., LTD., Yongin-si, Gyeonggi-do 17084 (KR)
(72) Inventor: LEE, Su Min, Suwon-si, Gyeonggi-do 16678 (KR); KIM, Jung Hyun, Suwon-si, Gyeonggi-do 16678 (KR); CHO, Young Jae, Suwon-si, Gyeonggi-do 16678 (KR); JUNG, Jin Wook, Suwon-si, Gyeonggi-do 16678 (KR)
(74) Representative: Michalski Hüttermann & Partner mbB

(57) **Abstract**

A cylindrical battery, an electrode assembly included therein, and a method for manufacturing the same are disclosed. The electrode assembly has a cylindrical shape formed by winding a stack, in which a separator is interposed between a positive electrode and a negative electrode multiple times to have a winding core, and includes a fixing tape configured to fix the separator exposed at the winding core to an inner surface of the electrode assembly.

## Description

### CROSS-REFERENCE TO RELATED APPLICATION

The present application claims priority to Korean Patent Application No. 10-2024-0187806, filed on December 17, 2024 in the Korean Intellectual Property Office.

### BACKGROUND

### Technical Field

The present disclosure relates to an electrode assembly, and to a battery including the electrode assembly.

### Description of the Related Art

Unlike a primary battery that typically cannot be recharged, a rechargeable battery can typically be recharged and discharged. A low-capacity rechargeable battery may be used for portable small-sized electronic devices, such as, e.g., smartphones, feature phones, notebook computers, digital cameras, and camcorders, and a high-capacity rechargeable battery is typically widely used as a power source for, e.g., driving a motor and a power storage battery in hybrid vehicles or electric vehicles. Such a rechargeable battery includes electrodes including a positive electrode and/or a negative electrode, an electrode assembly including the electrodes, a case that accommodates the electrode assembly, electrode terminals connected to the electrode assembly, and the like.

As technology advances, batteries with high capacity are advantageous. Accordingly, a plurality of batteries may be electrically connected and used. For example, the battery may be applied to an electronic device in the form of a battery module including a plurality of batteries, and/or a battery pack including a plurality of battery modules. According to an example embodiment, the battery pack is also configured by a plurality of batteries. In this case, the electronic device requires high power and/or high capacity and includes, for example, an electric vehicle or the like.

Batteries include an electrode assembly, which constitutes a unit structure that performs power charging and discharging operations. The electrode assembly may be classified as cylindrical, stacked, or stacked-and-folded electrode assemblies according to the shape thereof. Among these electrode assemblies, the cylindrical electrode assembly has the advantages of relatively large capacity and structural stability.

The cylindrical electrode assembly may be manufactured in a jelly-roll shape by winding a stack of a positive electrode, a separator, a negative electrode, and a separator, each of which has a long sheet shape, multiple times. During the winding process, the stack is wound multiple times in a clockwise or counterclockwise direction while gripping a portion of the separator. After the winding of the stack is completed, the gripped separator is released, and a part of the separator takes the form of a Taegeuk pattern crossing the winding core. The taegeuk pattern refers to a spiral-based pattern comprising interlocked curved regions. The separator crossing the winding core becomes an obstacle in a subsequent welding process or the like, and thus, a reform process is performed to bring the separator crossing the winding core into contact, or close contact, with an inner surface of the electrode assembly.

The above-described information disclosed in the background technology of the present disclosure is merely intended to improve the understanding of the background of the present disclosure and thus may include information that does not form the related art.

### SUMMARY

The present disclosure is directed to providing an electrode assembly, a method for manufacturing the electrode assembly, and a battery including the electrode assembly, the battery being capable of reducing or preventing a reformed separator in a cylindrical electrode assembly from detaching from an inner surface of the electrode assembly and crossing a winding core portion after a winding process.

However, the challenges to be addressed by the present disclosure are not limited to the above-mentioned issues, and other challenges not mentioned can be clearly understood by those skilled in the art from the following description.

According to one example embodiment of the present disclosure, an electrode assembly with a cylindrical shape is formed by winding a stack multiple times to create a winding core with a separator interposed between a positive electrode and a negative electrode, the electrode assembly including a fixing tape configured to fix the separator exposed at the winding core to an inner surface of the electrode assembly.

According to an aspect of the example embodiment, the fixing tape may include an electrically insulating film. The electrically insulating film may be formed of or include at least one of a polyimide (PI)-based resin, a polyethylene (PE)-based resin, or a polyester (PET)-based resin.

According to another aspect of the example embodiment, the fixing tape may include a porous film. The porous film may include a base film with a plurality of holes formed therein. Herein, an area occupied by the plurality of holes may range from about 10% to about 90% of an area of the base film. In addition, the plurality of holes may be substantially uniform in size and regularly arranged on an entire surface of the base film. Alternatively, the plurality of holes may be non-uniform in size or irregularly arranged on an entire surface of the base film. In addition, a planar shape of each of the plurality of holes may be substantially circular, elliptical, or polygonal.

According to still another aspect of the example embodiment, the fixing tape may include an upper fixing tape and a lower fixing tape, which are respectively attached to an upper side and a lower side of the separator to cross an end portion of the separator. In addition, the fixing tape may further include one or more intermediate fixing tapes attached between the upper fixing tape and the lower fixing tape.

According to still another aspect of the example embodiment, the fixing tape may be attached along an end portion of the separator.

According to another example embodiment of the present disclosure, a method for manufacturing an electrode assembly includes preparing a stack in which a separator is interposed between a positive electrode and a negative electrode, gripping one end portion of the separator and winding the stack multiple times to form the electrode assembly with a cylindrical shape, bringing the separator exposed at a winding core of the electrode assembly into contact, or close contact, with an inner surface of the electrode assembly, and inserting a fixing tape into the winding core, and fixing the separator, which is in contact, or close contact, with the inner surface of the electrode assembly, with the fixing tape.

According to an aspect of the example embodiment, the fixing tape may include an electrically insulating film.

According to another aspect of the example embodiment, the fixing tape may include a porous film. In this case, the porous film may include a base film with a plurality of holes formed therein, and an area occupied by the plurality of holes may range from about 10% to about 90% of an area of the base film.

According to still another aspect of the example embodiment, the fixing tape may be gripped by a jig with a clip structure, or adhered to a jig with a suction function, and inserted into the winding core.

According to still another example embodiment of the present disclosure, a battery includes a cylindrical case, and an electrode assembly with a cylindrical shape, which is accommodated inside the cylindrical case and formed by winding a stack multiple times to create a winding core with a separator is interposed between a positive electrode and a negative electrode, the electrode assembly may include a fixing tape configured to fix the separator exposed at a winding core of the electrode assembly to an inner surface of the electrode assembly.

According to an aspect of the example embodiment, the fixing tape may include an electrically insulating and porous film. In this case, the porous film may include a base film with a plurality of holes formed therein, and an area occupied by the plurality of holes may range from about 10% to about 90% of an area of the base film.

### BRIEF DESCRIPTION OF THE DRAWINGS

The following drawings appended to the present specification are intended to illustrate example embodiments of the present disclosure, and the spirit of the present disclosure is better understood from the accompanying drawings together with the following description of the disclosure, and thus illustrations in the drawings should not be construed as limiting the scope of the present disclosure, in which:
FIG. 1 is a perspective view schematically illustrating a configuration of a battery pack;
FIG. 2 is a perspective view schematically illustrating a configuration of a battery in FIG. 1;
FIG. 3 is a cross-sectional view schematically illustrating a configuration of the battery of FIG. 2;
FIG. 4 is a perspective view schematically illustrating a configuration of an electrode assembly according to one example embodiment;
FIG. 5 is a perspective view schematically illustrating the electrode assembly and a fixing tape of FIG. 4 in a separated state;
FIG. 6 is a plan view schematically illustrating a configuration of the electrode assembly of FIG. 4;
FIG. 7A is a plan view schematically illustrating an example of a state in which a fixing tape is disposed only on a portion of an inner surface of the electrode assembly;
FIG. 7B is a plan view schematically illustrating another example of the state in which the fixing tape is disposed only on a portion of the inner surface of the electrode assembly;
FIG. 7C is a plan view schematically illustrating still another example of the state in which the fixing tape is disposed only on a portion of the inner surface of the electrode assembly;
FIG. 8A is a plan view schematically illustrating an example of a form of the fixing tape in which a plurality of holes are formed;
FIG. 8B is a plan view schematically illustrating another example of the form of the fixing tape in which a plurality of holes are formed;
FIG. 8C is a plan view schematically illustrating still another example of the form of the fixing tape in which a plurality of holes are formed;
FIG. 9 is a flowchart illustrating a method for manufacturing the electrode assembly according to one example embodiment;
FIG. 10 is a view schematically illustrating an example of a configuration of a jig that can be used in a process S40 in FIG. 9;
FIG. 11A is a view schematically illustrating another example of the configuration of the jig that can be used in the process S40 in FIG. 9;
FIG. 11B is a view schematically illustrating an example of a state in which the fixing tape is gripped using the jig shown in FIG. 11A; and
FIG. 11C is a view schematically illustrating another example of the state in which the fixing tape is gripped using the jig shown in FIG. 11A.

### DETAILED DESCRIPTION

Hereinafter, example embodiments of the present disclosure are described in detail with reference to the accompanying drawings. The terms or words used in the present specification and claims should not be construed as being limited to ordinary or dictionary meanings, and should be construed as meanings and concepts consistent with the technical spirit of the present disclosure based on the principle that an inventor can appropriately define concepts and terms to explain the disclosure of the inventor in the best way. Therefore, the embodiments described herein and the configuration illustrated in the drawings are only example embodiments and are not representative of the full the technical spirit of the present disclosure, and thus, it should be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, for helping understand the disclosure, the accompanying drawings may be illustrated not as actual scales. Rather, sizes of some components may be exaggerated. In addition, the same reference numerals may be assigned to the same components in different embodiments.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a plural number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

In addition, when it is described that a component is "connected," "coupled," or "accessed" to another component, these components may be "directly connected" or accessed to each other, but it should be understood that still another component may be "interposed" between these components, or these components are "connected," "coupled" or "accessed" through still another component.

As used herein, the term "and/or" includes any and all combinations of one or more of the associated listed items. Further, when describing embodiments of the present disclosure, the use of "may" indicates one or more embodiments of the present disclosure. When preceding a list of elements, the terms "one or more" and "at least one" modify the entire list of elements and do not modify the individual elements of the list.

The expression "A and/or B" throughout the specification indicates A, B, or "A and B," unless otherwise differently stated. The expression "C to D" indicates C or more and D or less, unless otherwise specified.

When phrases such as "at least one of A, B and C, "at least one of A, B or C," "at least one of A, B and C," or "at least one of A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art. When ranges are specified, the range includes all values therebetween such as increments of 0.1%.

It is understood that, although the terms first, second, third, and the like may be used herein to describe various elements, components, regions, layers, and/or sections, these elements, components, regions, layers, and/or sections should not be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is understood that the spatially relative terms are intended to encompass different orientations of the apparatus in use or operation in addition to the orientation depicted in the figures. For example, when the apparatus in the drawing is turned over, elements described as "below" or "beneath" other elements would then be oriented "above" or "over" the other elements. Thus, the term "below" may encompass both an orientation of above and below.

The terms used in the present specification are intended to describe example embodiments of the present disclosure and are not intended to limit the present disclosure.

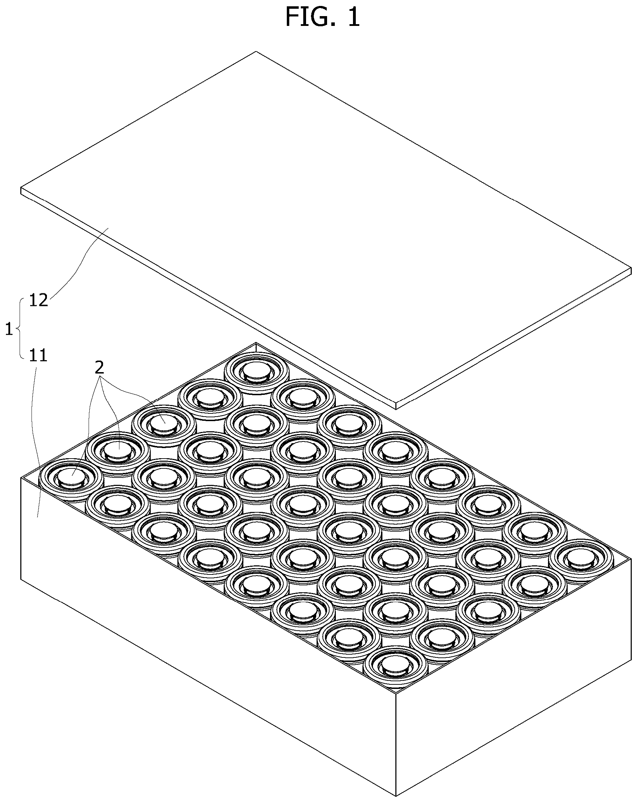

FIG. 1 is a perspective view schematically illustrating an example of a configuration of a battery pack including a plurality of cylindrical batteries. Referring to FIG. 1, the battery pack includes a housing 1 and batteries 2.

The housing 1 forms an exterior of the battery pack, and may provide a space which may accommodate the batteries 2. The housing 1 may include a housing body 11 and a cover 12.

The housing body 11 may have a box shape, with an empty interior and one open side. A cross-sectional shape of the housing body 11 is not limited to a quadrangular shape shown in FIG. 1, and may be changed in design to have various shapes such as, e.g., a polygonal shape, a circular shape, and an elliptical shape, among other shapes.

The cover 12 may be coupled to the housing body 11 and may close an internal space of the housing body 11. As an example, the cover 12 may have a substantially plate shape, and may face the open side of the housing body 11. The cover 12 may be fixed to the housing body 11 by various types of coupling methods such as, e.g., bolting, welding, fitting, and the like.

The battery 2 may constitute a unit structure, which stores and supplies power, in the battery pack. A plurality of batteries 2 may be provided. The plurality of batteries 2 may be disposed in the housing 1 to form various patterns, such as, e.g., a grid shape and a zigzag shape. The plurality of batteries 2 may be arranged side by side. The number of batteries 2 may be variously changed in design depending on the size, shape, or the like, of the housing 1. A detailed configuration of each of the batteries 2 is described below.

The plurality of batteries 2 may be electrically connected by, e.g., bus bars (not shown). The plurality of batteries 2 may be connected in series or in parallel by the bus bars. As an example, in the housing 1, the bus bars may connect the batteries 2 disposed in the same row in parallel, and connect the batteries 2 disposed in two adjacent rows in series. The bus bar may be formed of or include an electrically conductive material, such as at least one of copper, aluminum, nickel, or the like.

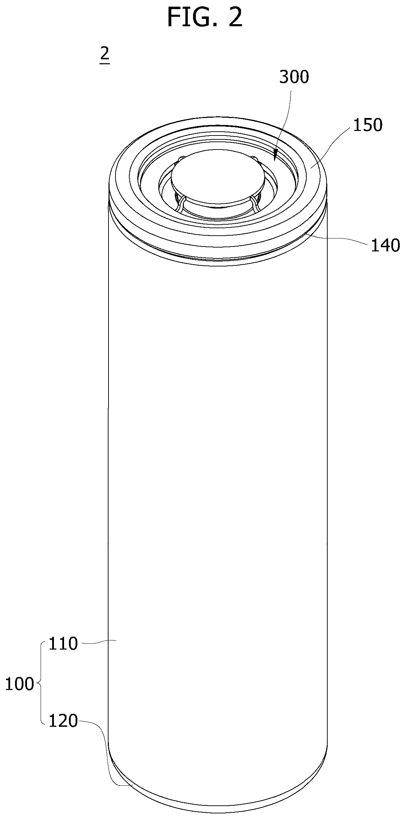

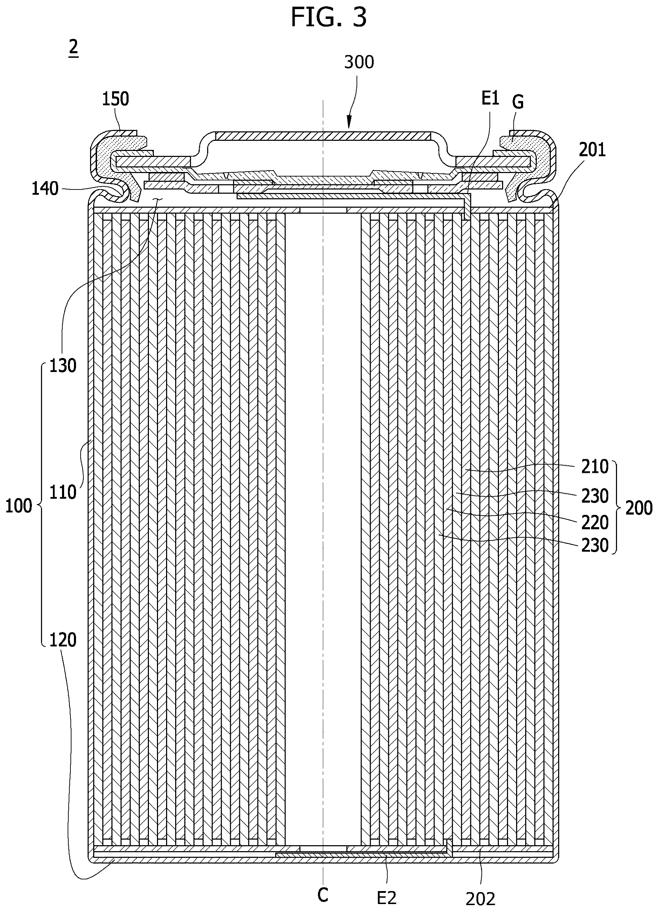

FIG. 2 is a perspective view schematically illustrating a configuration of the battery according to one example embodiment, and FIG. 3 is a cross-sectional view schematically illustrating a configuration of the battery of FIG. 2. Referring to FIGS. 2 and 3, the battery 2 may include a case 100, an electrode assembly 200, and a cap assembly 300.

The case 100 may form a schematic exterior of the battery 2. The case 100 may be formed of or include an electrically conductive material. For example, the case 100 may be formed of or include a material that includes at least one or more of steel, stainless steel, aluminum, and an aluminum alloy. Accordingly, the case 100 can protect the electrode assembly 200 from external impact, and may be configured to perform a heat dissipation function to release heat generated during charging and discharging operations of the electrode assembly 200 to the outside of the case 100.

The case 100 may include a side wall part 110 in the shape of a cylinder with a central axis C formed in a central portion. The central axis C of the case 100 described below may refer to a central axis of the side wall part 110. Both end portions of the side wall part 110 that are perpendicular to the central axis C of the case 100 may be open.

The case 100 may further include a bottom part 120 that closes a lower end portion of the side wall part 110. The bottom part 120 may have a substantially disk shape, and may be disposed to face the lower end portion of the side wall part 110. The bottom part 120 may be disposed perpendicularly to the central axis C of the case 100. A peripheral surface of the bottom part 120 may be coupled to the lower end portion of the side wall part 110. The bottom part 120 may be integrally formed with the side wall part 110 by a drawing process or the like, or alternatively, the bottom part 120 may be fabricated separately from the side wall part 110, and then coupled to the side wall part 110 by welding or the like.

The case 100 may further include an opening 130 that opens an upper end portion of the side wall part 110. The opening 130 may constitute a configuration that provides a path, through which the electrode assembly 200 to be described below is inserted into the interior of the case 100, on an upper end region of the case 100, and provides a space in which the cap assembly 300 to be described below can be installed. The opening 130 may refer to an empty space surrounded by the upper end region of the side wall part 110, which is located at a side opposite to the bottom part 120.

The electrode assembly 200 may constitute a unit structure for performing a power charging and discharging operation in the battery 2. The electrode assembly 200 may include a first electrode plate 210, a second electrode plate 220, and a separator 230 disposed between the first electrode plate 210 and the second electrode plate 220.

The electrode assembly 200 may be disposed inside the case 100. The electrode assembly 200 may be inserted into the case 100 through the opening 130 of the case 100.

The electrode assembly 200 may have a shape that is wound around a winding axis. For example, the electrode assembly 200 may have a shape in which the first electrode plate 210, the separator 230, and the second electrode plate 220 are stacked and wound in a clockwise or counterclockwise direction around the winding axis. Accordingly, the electrode assembly 200 may have a shape (cylindrical shape) that is substantially similar to a jelly roll. Here, the winding axis may refer to a straight line passing through a central portion of the electrode assembly 200. The winding axis of the electrode assembly 200 may be disposed coaxially with the central axis C of the case 100.

The first electrode plate 210 may constitute a positive electrode of the electrode assembly 200. The first electrode plate 210 may be formed in the shape of a foil including a metal material such as aluminum or an aluminum alloy. The type, size, and shape of the first electrode plate 210 are not particularly limited as long as the first electrode plate 210 has conductivity and does not cause adverse chemical changes in the battery.

A first active material layer may be applied to at least a portion of the first electrode plate 210. The first active material layer may be applied to both surfaces of the first electrode plate 210, or alternatively, the first active material layer may be applied to only one surface of the first electrode plate 210. As the first electrode plate 210 constitutes a positive electrode, the first active material layer may include a positive electrode active material.

The positive electrode active material may include a compound (lithiated intercalation compound) capable of reversibly intercalating and deintercalating lithium. For example, the positive electrode active material may include one or more types of composite oxides of lithium, and a metal such as or including at least one of cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). For example, the conditions 0<x<1, 0<y<1, 0<z<1, and x+y+z=1 may be satisfied. The positive electrode active material may include only one of LiFePO₄, LiMnFePO₄, and LiNiₓCo_{y}Mn_{z}O₂, and may also include two or all of LiFePO₄, LiMnFePO₄, and LiNiₓCo_{y}Mn_{z}O₂.

The first active material layer may further include a positive electrode conductive material. The positive electrode conductive material is included to impart conductivity to the first active material layer, and any electrically conductive material that does not cause a chemical change in the battery may be included. Examples of the positive electrode conductive material may include a carbon-based material such as at least one of natural graphite, artificial graphite, carbon black, acetylene black, Ketjen black, carbon fibers, carbon nanofibers, carbon nanotubes, and the like, a metal-based material in the form of a metal powder or metal fibers including at least one of copper, nickel, aluminum, silver, and the like, a conductive polymer such as a polyphenylene derivative, or a mixture thereof.

The first active material layer may further include a positive electrode binder. The positive electrode binder is configured to adhere particles constituting the positive electrode active material to each other, and to adhere the positive electrode active material to the first electrode plate 210. Examples of the positive electrode binder may include at least one of a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is included as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be included in combination. At least one of Na, K, or Li can be included as the alkali metal.

The dry binder is a polymer material capable of being fiberized, and may be or include, for example, at least one of polytetrafluoroethylene, polyvinylidene fluoride, a polyvinylidene fluoride-hexafluoropropylene copolymer, a polyethylene oxide, or a combination thereof.

The first electrode plate 210 may be electrically connected to the cap assembly 300. As the first electrode plate 210 constitutes the positive electrode of the electrode assembly 200, the cap assembly 300 may constitute a positive terminal of the battery 2. As an example, the first electrode plate 210 may be electrically connected to the cap assembly 300 by a first electrode tab E1. The first electrode tab E1 may include a conductive metal material such as at least one of copper, a copper alloy, nickel, or a nickel alloy. The first electrode tab E1 is disposed on an upper side of the electrode assembly 200, and may have both end portions connected to the first electrode plate 210 and the cap assembly 300, respectively. One end portion of the first electrode tab E1 may be directly connected to the first electrode plate 210, or may be indirectly connected to the first electrode plate 210 through a separate current collector plate (not shown) connected to the first electrode plate 210. However, the first electrode plate 210 is not limited to the above, and may also be directly connected to the cap assembly 300 without the first electrode tab E1.

The second electrode plate 220 may constitute a negative electrode of the second electrode assembly 200. The second electrode plate 220 may be in the form of a foil including a metal material such as or including at least one of copper, a copper alloy, nickel, or a nickel alloy. The second electrode plate 220 may be spaced apart from the first electrode plate 210 by a desired or predetermined interval to face the first electrode plate 210. The type, size, and shape of the second electrode plate 220 are not particularly limited, as long as the second electrode plate 220 has conductivity and does not cause adverse chemical changes in the battery.

A second active material layer may be applied to at least a portion of the second electrode plate 220. The second active material layer may be applied to both surfaces of the second electrode plate 220, or alternatively, the second active material layer may be applied to only one surface of the second electrode plate 220. As the second electrode plate 220 constitutes a negative electrode, the second active material layer may include a negative electrode active material.

The negative electrode active material may include at least one of a material that can reversibly intercalate/deintercalate lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate shape, flake, spherical shape or fibrous natural graphite or artificial graphite. Examples of the amorphous carbon may include at least one of soft carbon or hard carbon, a mesophase pitch carbonized product, calcined coke, and the like.

The lithium metal alloy may be or include an alloy of lithium and a metal such as at least one of Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be included as the material capable of doping and dedoping lithium. The Si-based negative electrode active material may include at least one of silicon, a silicon-carbon composite, SiOₓ (x=0 or 2), a Si-Q alloy (where, Q is or includes at least one of an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to one example embodiment, the silicon-carbon composite may be in the form of silicon particles, and amorphous carbon coated on the surface of the silicon particles. For example, the silicon-carbon composite may include a rechargeable particle (core) in which silicon primary particles are agglomerated, and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer located on the surface of the core.

The Si-based negative electrode active material or the Sn-based negative electrode active material may be included by being mixed with a carbon-based negative electrode active material.

The second active material layer may further include a negative electrode conductive material and a negative electrode binder.

The negative electrode conductive material is included to impart conductivity to the second active material layer, and any electrically conductive material that does not cause a chemical change in the battery may be included. Examples of the negative electrode conductive material may include a carbon-based material such as at least one of natural graphite, artificial graphite, carbon black, acetylene black, Ketjen black, carbon fibers, carbon nanofibers, carbon nanotubes, and the like, a metal-based material in the form of a metal powder or metal fibers including at least one of copper, nickel, aluminum, silver, and the like, a conductive polymer such as a polyphenylene derivative, or a mixture thereof.

The negative electrode binder is configured to adhere particles constituting the negative electrode active material to each other, and to adhere the negative electrode active material to the second electrode plate 220. Examples of the negative electrode binder may include at least one of a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is included as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be included in combination. At least one of Na, K, or Li can be included as the alkali metal.

The dry binder is a polymer material capable of being fiberized, and may be or include, for example, at least one of polytetrafluoroethylene, polyvinylidene fluoride, a polyvinylidene fluoride-hexafluoropropylene copolymer, a polyethylene oxide, or a combination thereof.

The second electrode plate 220 may be electrically connected to the case 100. As an example, the second electrode plate 220 may be electrically connected to the case 100 by a second electrode tab E2. As the second electrode plate 220 constitutes the negative electrode of the electrode assembly 200, the case 100 may constitute a negative electrode terminal of the battery 2. The second electrode tab E2 may be formed of or include a conductive metal material such as at least one of copper, a copper alloy, nickel, or a nickel alloy. The second electrode tab E2 is disposed at a lower side of the electrode assembly 200, and may have both end portions connected to the second electrode plate 220 and the bottom part 120 of the case 100, respectively. One end portion of the second electrode tab E2 may be directly connected to the second electrode plate 220, or may be indirectly connected to the second electrode plate 220 through a separate current collector plate (not shown) connected to the second electrode plate 220. However, the second electrode plate 220 is not limited to the above, and may also be directly connected to the case 100 without the second electrode tab E2.

The separator 230 may be disposed between the first electrode plate 210 and the second electrode plate 220. The separator 230 may be configured to reduce or prevent short-circuiting of the first electrode plate 210 and the second electrode plate 220 while allowing the movement of lithium ions between the first electrode plate 210 and the second electrode plate 220.

The separator 230 may include at least one of polyethylene, polypropylene, polyvinylidene fluoride, or a multilayer film of two or more layers thereof, and may also include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 230 may include a porous substrate and a coating layer including an organic material, an inorganic material, or a combination thereof, positioned on one surface or both surfaces of the porous substrate.

The porous substrate may be or include at least one of a polymer film formed of a polymer, or a copolymer or a mixture of two or more of polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be mixed in one coating layer, or may be present in a form in which a coating layer including organic materials and a coating layer including inorganic materials are stacked.

A pair of separators 230 may be provided. The pair of separators 230 may face opposite surfaces of the first electrode plate 210 or the second electrode plate 220, respectively. The pair of separators 230 may be wound around the winding axis together with the first electrode plate 210 and the second electrode plate 220.

A first insulating plate 201 and a second insulating plate 202 may be disposed on both sides (an upper side and a lower side in FIG. 3) of the electrode assembly 200, respectively. The first insulating plate 201 and the second insulating plate 202 may each include insulating materials such as, e.g., rubber, polyethylene (PE), polypropylene (PP), polyethylene terephthalate (PET), and the like.

The first insulating plate 201 may have a substantially disk shape. The first insulating plate 201 may be disposed between the cap assembly 300 and an upper surface of the electrode assembly 200. Accordingly, the first insulating plate 201 may substantially block the upper surface of the electrode assembly 200 from directly contacting the cap assembly 300, and substantially insulate the electrode assembly 200 and the cap assembly 300 from each other. A through hole (not shown) through which the first electrode tab E1 may pass may be formed in the first insulating plate 201.

The second insulating plate 202 may have a substantially disk shape. The second insulating plate 202 may be disposed between a lower surface of the electrode assembly 200 and the bottom part 120 of the case 100. Accordingly, the second insulating plate 202 may substantially block the lower surface of the electrode assembly 200 from directly contacting the bottom part 120 of the case 100, and substantially insulate the electrode assembly 200 and the bottom part 120 of the case 100 from each other. A through hole (not shown) through which the second electrode tab E2 may pass may be formed in the second insulating plate 202.

The cap assembly 300 may be disposed at an upper end portion of the side wall part 110, that is, at the opening 130. The opening 130 of the case 100 is sealed by the cap assembly 300, and to this end, the cap assembly 300 may be coupled to the case 100.

A beading part 140, which is formed to be concave toward the central axis C of the case 100, may be formed on the side wall part 110. The beading part 140 is disposed on a lower side of the cap assembly 300, and may restrict the cap assembly 300 from being inserted more than a set distance into the interior of the case 100.

A crimping part 150, which is formed by bending the upper end portion of the side wall part 110 toward the central axis C of the case 100, may be formed on an upper side of the beading part 140. The crimping part 150 is disposed on an upper side of the cap assembly 300, and may substantially prevent the cap assembly 300 from being separated from the case 100.

A gasket G may be disposed between the case 100 and the cap assembly 300. The gasket G may constitute a component that fixes a position of the cap assembly 300 in the opening 130 by its own elastic restoring force, electrically insulates the case 100 and the cap assembly 300 from each other, and substantially prevents moisture or electrolyte from entering or exiting between the case 100 and the cap assembly 300.

The gasket G may include insulating materials such as at least one of rubber, polyethylene (PE), polypropylene (PP), polyethylene terephthalate (PET), and the like. The gasket G may have a substantially ring shape, and may be disposed inside the beading part 140 and/or the crimping part 150. An outer side surface of the gasket G may be in contact, or close contact, with an inner side surface of the beading part 140 and/or the crimping part 150, and an inner side surface of the gasket G may be in contact, or close contact, with an outer side surface of the cap assembly 300.

As described above, the cap assembly 300 may be electrically connected to the first electrode plate 210 by the first electrode tab E1. As the first electrode plate 210 constitutes the positive electrode of the electrode assembly 200, the cap assembly 300 may constitute a positive terminal of the battery.

The cap assembly 300 may be formed with a structure that interrupts the flow of current when an internal pressure of the case 100 increases due to overcurrent or the like, thereby cutting off the electrical connection between the battery 2 and an external device. The cap assembly 300 may also be formed with a structure that ruptures when the internal pressure of the case 100 increases to greater than or equal to a set level, and allows the internal space and external space of the case 100 to be in communication. Accordingly, the cap assembly 300 can reduce the risk of explosion of the battery 2 when an overcurrent occurs.

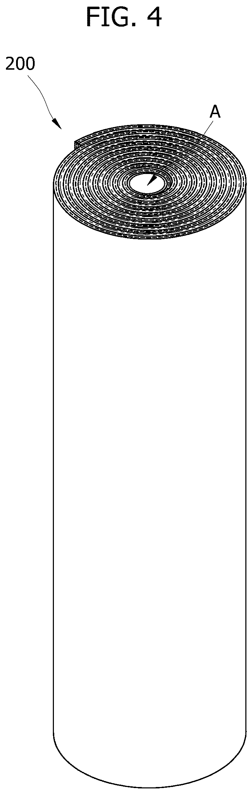

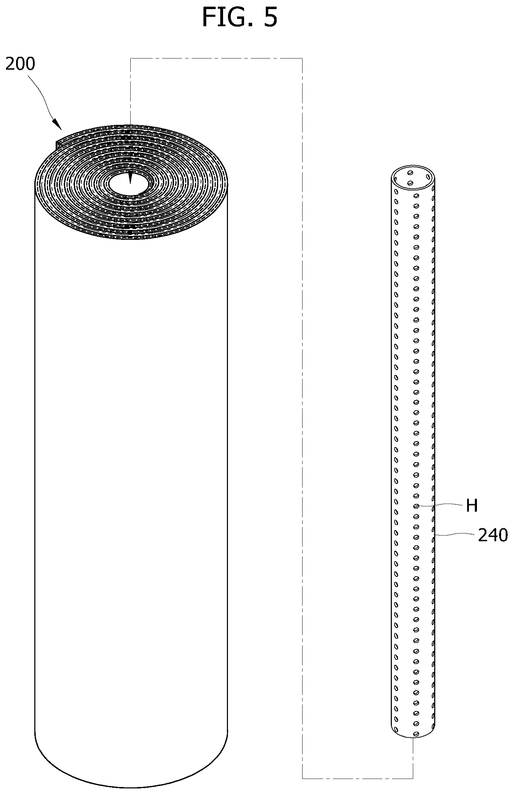

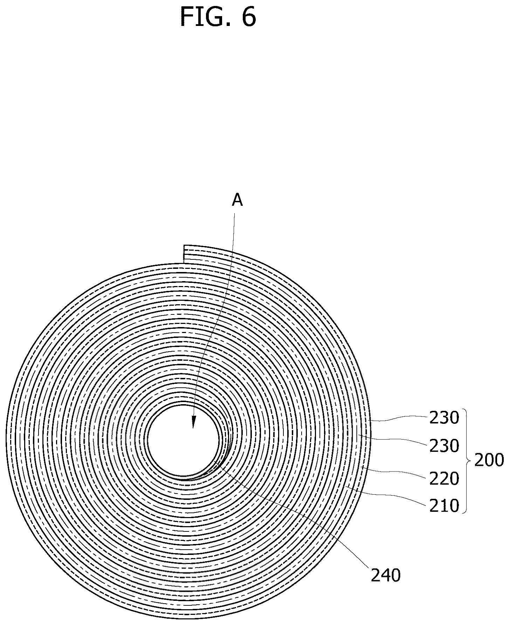

FIG. 4 is a perspective view schematically illustrating a configuration of the electrode assembly according to one example embodiment, FIG. 5 is a perspective view schematically illustrating the electrode assembly and a fixing tape of FIG. 4 in a separated state, and FIG. 6 is a plan view schematically illustrating a configuration of the electrode assembly of FIG. 4.

Referring to FIGS. 4 to 6, the electrode assembly 200 is a cylindrical electrode assembly formed by winding a stack, in which the positive electrode 210, the separator 230, the negative electrode 220, and the separator 230 are stacked, e.g., sequentially stacked, multiple times. Such an electrode assembly is commonly also referred to as a jelly-roll electrode assembly.

The positive electrode 210, the negative electrode 220, and the separator 230 may have a sheet shape with a long side that has a relatively large length. The term "sheet shape" may refer to a structure with substantially uniform thickness and a generally rectangular planar shape. A length of a short side may vary depending on a height of the battery including the electrode assembly 200. In addition, the length of the long side may vary depending on the number of windings of the stack constituting the electrode assembly 200. Typically, among the positive electrode 210, the negative electrode 220, and the separator 230, the separator 230 has the greatest length along the long side.

The cylindrical electrode assembly 200 can be manufactured by alternately stacking the sheet-shaped positive electrode 210, the sheet-shaped separator 230, the sheet-shaped negative electrode 220, and the sheet-shaped separator 230 to form a stack, and then winding the stack multiple times while gripping a surplus portion of the separator 230, which protrudes beyond the positive electrode 210 or negative electrode 220 in a longitudinal direction, with a rod-shaped winding core member. In this case, the rod-shaped winding core member may become a winding axis of the electrode assembly 200, and the winding axis may be substantially parallel to the short side of the separator 230. In addition, when the electrode assembly 200 is inserted into the case 100, the winding axis may be substantially parallel to the central axis C (see FIG. 3) of the case.

When the rod-shaped member is removed after winding the stack, a center portion (a winding core portion A) of the jelly-roll type electrode assembly 200 becomes hollow. However, the surplus portion of the separator 230 gripped by the winding member crosses the winding core portion A, and the separator 230, with the surplus portion crossing the winding core portion A, may form a planar shape similar to a Taegeuk pattern. Subsequently, a reform process is performed by inserting a reform pin into the winding core portion A to closely attach the surplus portion of the separator 230 to an inner surface of the electrode assembly 200. As a result, the winding core portion A of the electrode assembly 200 no longer has any surplus portion of the separator 230 and remains hollow.

According to the example embodiment, the electrode assembly 200 further includes a fixing tape 240 configured to fix the reformed separator 230 to the inner surface of the electrode assembly 200. The fixing tape 240 is configured to fix the surplus portion of the separator 230 that is brought into contact, or close contact, with the inner surface of the electrode assembly 200 by the reform process not to be detached. In other words, the fixing tape 240 substantially prevents the surplus portion of the separator 230 from detaching from the inner surface of the electrode assembly 200 and protruding toward the winding core portion A after the reform process.

Accordingly, subsequent processes, such as, e.g., a welding process for an electrode tab, can substantially prevent the separator 230 from being damaged by a welding rod. In addition, during an electrolyte injection process, the collapse of the separator 230 can also be substantially prevented. As a result, not only can the productivity of the electrode assembly 200 be improved, but the stability of the electrode assembly 200 can also be enhanced.

The fixing tape 240 may include an electrically insulating film. For example, the fixing tape 240 may have a configuration in which an adhesive is applied to one surface of the electrically insulating film, or an adhesive layer is attached to the one surface. Accordingly, the fixing tape 240 can reduce or prevent current leakage from occurring in the winding core portion A of the electrode assembly 200.

There are no particular limitations on the material of the electrically insulating film. For example, the electrically insulating film may be formed of or include a polyimide (PI)-based resin, a polyethylene (PE)-based resin, a polyester (PET)-based resin, or the like. However, the present disclosure is not limited thereto, and the electrically insulating film may also be formed of or include materials such as, e.g., a polyolefin-based resin, a polyvinyl chloride-based resin, an ethylene-vinyl acetate (EVA)-based resin, and silicone rubber.

According to one example embodiment, the electrically insulating film may be formed of or include a material that does not react with the electrolyte of the battery 2. Accordingly, even when the electrolyte is injected into the interior of the case 100 of the battery 2 and the electrode assembly 200 is immersed in the electrolyte, the fixing tape 240 may continuously reduce or prevent the separator 230 from detaching.

The fixing tape 240 may have a shape that wraps around the entire inner surface of the electrode assembly 200. More specifically, the fixing tape 240 may have an overall cylindrical shape (see FIG. 5). In addition, the cylindrical fixing tape 240 is disposed at the winding core portion A of the electrode assembly 200 and may fix the separator 230 on the entire inner surface of the electrode assembly 200. For example, a height of the fixing tape 240 may be less than or equal to a width of the separator 230.

Alternatively, the fixing tape 240 may be disposed only on a portion of the inner surface of the electrode assembly 200. In this case, the fixing tape 240 may be attached across an end portion of the separator 230 exposed in the winding core portion A of the electrode assembly 200, the separator 230 can be effectively substantially prevented from becoming detached again. In addition, since the fixing tape 240 covers only a portion of the separator 230, the decrease or unevenness in an impregnation speed of the electrode assembly 200 during the subsequent electrolyte injection process caused by the fixing tape 240 can be reduced or minimized.

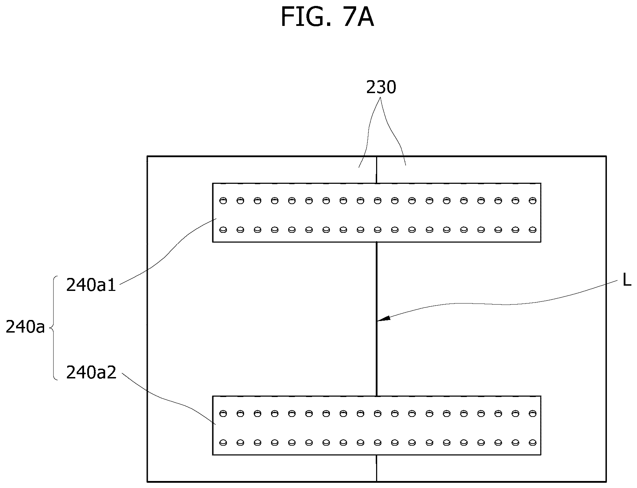

FIGS. 7A to 7C are plan views each schematically illustrating a state in which a fixing tape is disposed only on a portion of the inner surface of the electrode assembly. FIGS. 7A to 7C schematically illustrate the inner surface of the electrode assembly as unfolded and viewed from the winding core portion of the electrode assembly. In in FIGS. 7A to 7C, a vertical line L may correspond to a profile of one end portion of the separator 230, that is, one short side of the separator 230.

Referring to FIG. 7A, a fixing tape 240a may include an upper fixing tape 240a1 and a lower fixing tape 240a2 attached to the inner surface of the electrode assembly 200, e.g., the separator 230. The upper fixing tape 240a1 and the lower fixing tape 240a2 may both be attached to the separator 230 exposed in the winding core portion while crossing one short side L of the separator 230 in a horizontal direction. This effectively reduces or prevents one end portion of the separator 230 from detaching from the inner surface of the electrode assembly 200.

The upper fixing tape 240a1 is attached to an upper side of the separator 230. The upper fixing tape 240a1 may be adhered to align with an upper end of the separator 230, or may be attached slightly below the upper end. In addition, the lower fixing tape 240a2 is attached to a lower side of the separator 230. The lower fixing tape 240a2 may be attached to align with a lower end of the separator 230, or may be attached slightly above the lower end.

According to the example embodiment, by reducing or minimizing an area occupied by the fixing tape 240a for fixing the separator 230, the reduction in impregnation performance caused by the insertion of the fixing tape 240a can be reduced or minimized. On the other hand, since the fixing tape 240a can fix the separator 230 at least at the upper and lower sides by crossing the short side L, the fixing tape 240a can provide the lower or minimum adhesive force required to fix the separator 230.

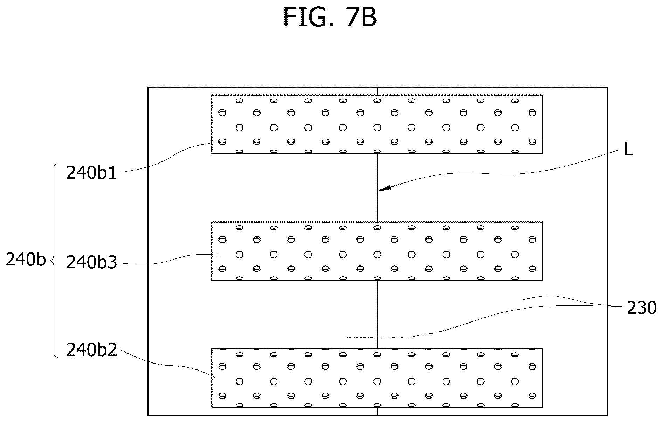

Referring to FIG. 7B, a fixing tape 240b may include an upper fixing tape 240b1, a lower fixing tape 240b2, and an intermediate fixing tape 240b3 attached to the inner surface of the electrode assembly 200, e.g., the separator 230. In addition, the upper fixing tape 240b1, the lower fixing tape 240b2, and the intermediate fixing tape 240b3 may all be attached to the separator 230 exposed in the winding core portion by crossing one short side L of the separator 230 in the horizontal direction. This further effectively reduces or prevents one end portion of the separator 230 from detaching from the inner surface of the electrode assembly 200.

The upper fixing tape 240b1 is attached to the upper side of the separator 230. The upper fixing tape 240b1 may be adhered to align with the upper end of the separator 230, or may be attached slightly below the upper end. In addition, the lower fixing tape 240b2 is attached to the lower side of the separator 230. The lower fixing tape 240b2 may be attached to align with the lower end of the separator 230, or may be attached slightly above the lower end. In addition, the intermediate fixing tape 240b3 is attached to the separator 230 between the upper fixing tape 240b1 and the lower fixing tape 240b2.

According to the example embodiment, by reducing or minimizing the area occupied by the fixing tape 240b for fixing the separator 230 as much as possible, the reduction in impregnation performance caused by the insertion of the fixing tape 240b can be reduced or suppressed. On the other hand, since the fixing tape 240b can fix the separator 230 not only at the upper and lower sides but also at an intermediate side while crossing at least the short side L of the separator 230, the adhesive force provided by the fixing tape 240b and required to secure the separator 230 can be further enhanced.

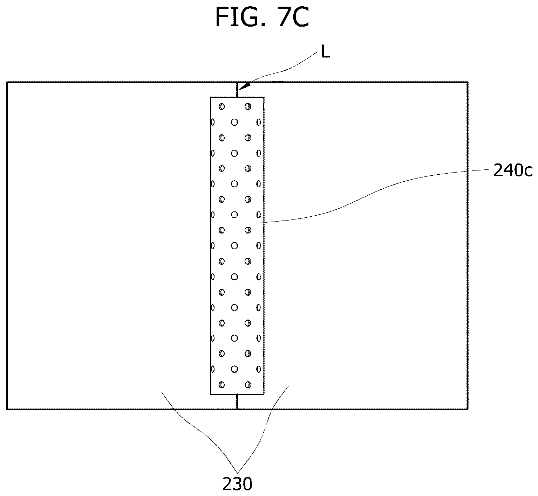

Referring to FIG. 7C, a fixing tape 240c may be attached to the separator 230, which is exposed in the winding core portion, to be substantially parallel to one short side L of the separator 230. That is, the fixing tape 240c may be attached in a vertical direction while covering one short side L of the separator 230. In FIG. 7C, the fixing tape 240c is illustrated as a single piece, but may be divided into a plurality of pieces and attached along one short side L of the separator 230. This effectively substantially prevents one end portion of the separator 230 from detaching from the inner surface of the electrode assembly 200.

According to the example embodiment, by reducing or minimizing an area occupied by fixing tape 240c for fixing the separator 230, the reduction in impregnation performance caused by the insertion of the fixing tape 240c can be reduced or minimized. In addition, since the fixing tape 240c can fix the separator 230 while covering most of the short side L of the separator 230, the end portion of the separator 230 can be fixed more firmly.

Continuing to refer to FIG. 5, the fixing tape 240 may include a porous film. When the fixing tape 240 is formed of or include a porous film, the electrolyte can pass through holes H of the fixing tape 240, thereby reducing or suppressing the reduction in electrolyte impregnation caused by the fixing tape 240. However, the present disclosure is not limited thereto, and the fixing tape 240 may be a general tape without holes formed therein.

A porous film may refer to a structure with a base film in which a plurality of holes H are formed. Here, the holes H may be through holes passing through the base film. The holes H are not particularly limited in size and may have a size that allows the electrolyte to pass through or larger.

Considering the impregnation characteristics of the electrolyte, it is advantageous for the holes H formed in the fixing tape 240 to be as large as possible and to be formed in large quantities. However, when the holes H are excessively large or present in large quantities, the adhesive force of the fixing tape 240 may be insufficient. Considering this, an area occupied by the plurality of holes H may range from about 10% to about 90% of an area of the fixing tape 240.

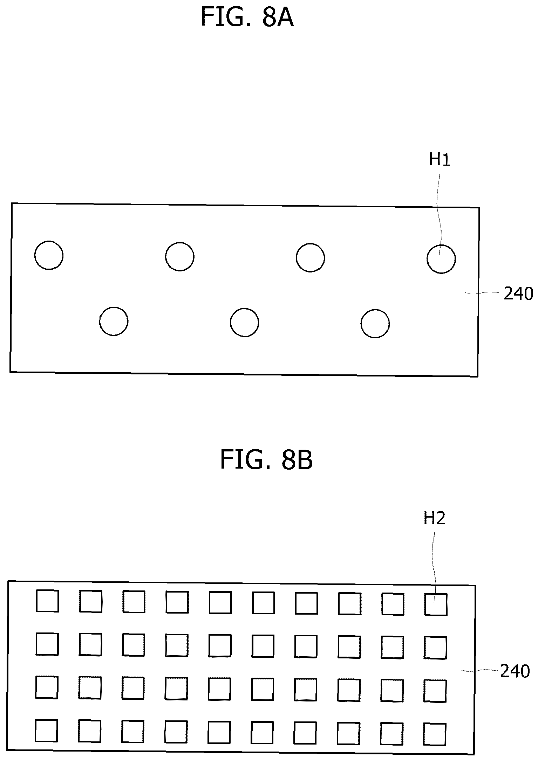

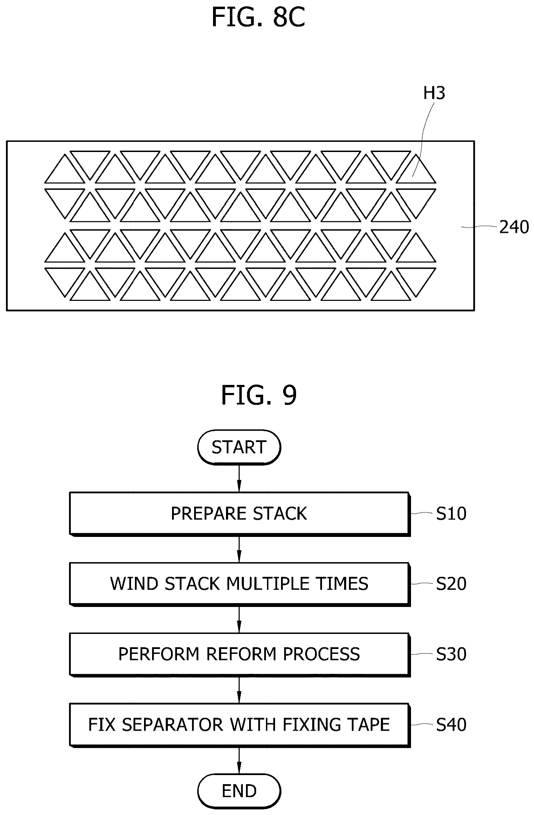

FIGS. 8A to 8C are plan views schematically illustrating forms of the fixing tape, each having a plurality of holes formed therein.

Referring to FIGS. 8A to 8C, a plurality of holes H1, H2, or H3 may be arranged, e.g., regularly arranged, on the entire surface of the fixing tape 240 The regular arrangement form is not particularly limited, and the plurality of holes H1, H2, or H3 may be arranged in a row in the horizontal and/or vertical direction, or in a zigzag form in either the horizontal or vertical direction. Alternatively, the plurality of holes H1, H2, or H3 may be substantially randomly arranged on the entire surface of the fixing tape 240.

The planar shape of each of the plurality of holes H1, H2, or H3 is also not particularly limited. For example, each of, or at least one of, the plurality of holes H1, H2, or H3 may have a circular shape, elliptical, an elliptical shape, a triangular shape, or other polygonal shapes. In addition, the sizes of the plurality of holes H1, H2, or H3 may be substantially uniformly consistent, or vary across the fixing tape.

Next, a method for manufacturing the electrode assembly according to one example embodiment is described.

FIG. 9 is a flowchart illustrating the method for manufacturing the electrode assembly according to one example embodiment.

Referring to FIGS. 4 to 6 and 9, first, a stack with a separator interposed between a positive electrode and a negative electrode is prepared (S10). The stack may, for example, include a sheet-shaped positive electrode 210, a sheet-shaped separator 230, a sheet-shaped negative electrode 220, and the sheet-shaped separator 230 stacked together, e.g., alternately stacked together. In addition, in the stack, a length of a long side of the separator 230 may be greater than the length of the positive electrode 210 or the negative electrode 220, and thus at least one side of the separator 230 may include a surplus portion (i.e., a portion protruding outward from one side of the positive electrode 210 or the negative electrode 220) with a predetermined or desired length.

In addition, in the stack, one end portion of the separator 230, i.e., the surplus portion is gripped, and the stack is wound multiple times (S20). As a result of the winding process (S20), a jelly-roll electrode assembly, i.e., a cylindrical electrode assembly, is produced. In the winding process (S20), there are no particular limitations on the type of winding member included to grip one end portion of the separator 230. In addition, the number of windings performed in the winding process (S20) is not particularly limited, and may vary depending on the size or performance of the jelly-roll electrode assembly to be manufactured. After performing the winding process (S20), the separator is detached from the winding member.

In addition, a reform process is performed on the electrode assembly wound in a cylindrical shape (S30). More specifically, the separator 230 exposed at a winding core of the cylindrically wound electrode assembly is brought into contact, or close contact, with an inner surface of the electrode assembly. As a result, the winding core becomes an empty space with nothing inside.

In addition, a fixing tape 240 is inserted into the empty winding core to fix the separator 230, which is in contact, or close contact, with the inner surface of the electrode assembly, using the fixing tape 240 (S40). At this time, the fixing tape 240 is attached to cover a portion or the entirety of the end portion of the separator 230, i.e., a short side of the separator 230 exposed at the winding core, thereby substantially preventing the adhered separator 230 from detaching later and protruding into the winding core. The size, shape, arrangement position, and porous structure of the fixing tape 240 have been described in detail above, and thus, further descriptions thereof are omitted here.

According to one example embodiment, the process of attaching the fixing tape 240 in process S40 may be performed using a predetermined jig capable of gripping the fixing tape 240 and attaching the fixing tape 240 to the separator 230.

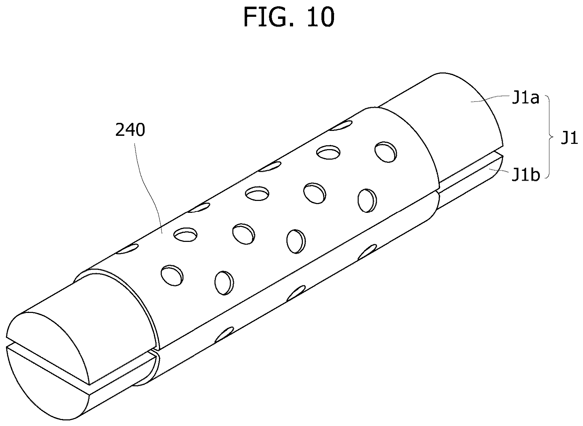

FIG. 10 is a view schematically illustrating an example of a configuration of a jig that can be included in process S40. Referring to FIG. 10, a jig J1 may have a clip structure capable of physically gripping both end portions of the fixing tape 240. The clip structure is not particularly limited in shape or operation method, as long as the clip structure can grip both end portions of the fixing tape 240, and allow the fixing tape 240 to be detached from the clip structure by manipulation. As an example, in FIG. 10, the clip structure is illustrated as a combined form of a first clip portion J1a and a second clip portion J1b.

By using the jig J1 with the clip structure shown in FIG. 10, both end portions of the fixing tape 240 can be gripped by the first clip portion J1a and the second clip portion J1b while the fixing tape 240 is in contact, or close contact, with the jig J1. For example, an inner surface of the fixing tape 240 in contact, or close contact, with the jig J1 may be non-adhesive, while an outer surface of the fixing tape 240 may have adhesive properties due to the application of an adhesive or the like. In addition, by inserting the jig J1, in the state shown in FIG. 10, into the winding core portion of the electrode assembly 200, operating the first clip portion J1a and the second clip portion J1b to release both end portions of the fixing tape 240 being gripped, and bringing the outer surface of the fixing tape 240 into contact with the separator 230, the outer surface of the fixing tape 240 can adhere to the separator 230.

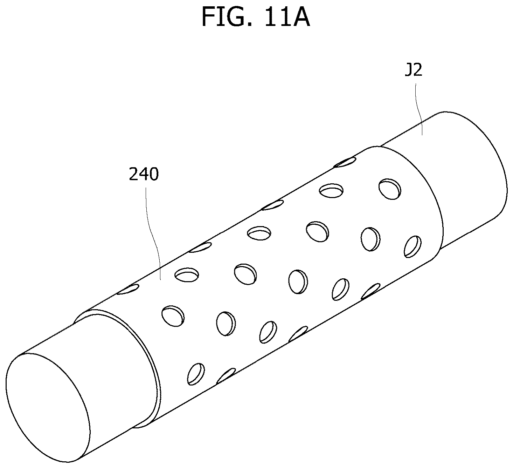

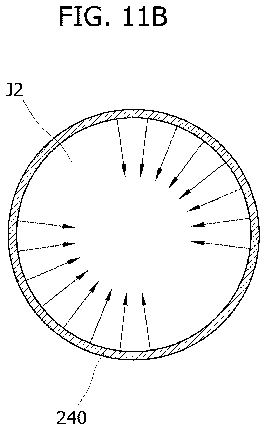

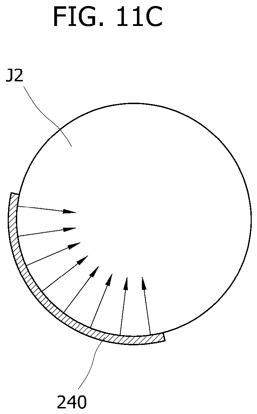

FIG. 11A is a view schematically illustrating another example of a configuration of the jig that can be included in process S40. In addition, FIGS. 11B and 11C are views each schematically illustrating a state in which the fixing tape is gripped using the jig shown in FIG. 11A. Referring to FIGS. 11A to 11C, a jig J2 may have a cylindrical structure capable of adhering the fixing tape 240 to the outer surface thereof using a predetermined or desired suction force. When the cylindrical jig J2 has a plurality of holes formed on the surface thereof and an empty interior that allows air to be drawn in through the interior, and thereby generates a suction force through the holes to adhere the fixing tape 240 to the outer surface of the jig J2, there are no particular limitations on the shape of the holes or the operation method of the jig J2. As an example, as shown in FIG. 11B, the suction force in the jig J2 may be generated across the entire outer circumferential surface of the jig J2, or as shown in FIG. 11C, the suction force in the jig J2 may be generated only on a portion of the outer circumferential surface of the jig J2.

By using the jig J2 with a clip structure shown in FIG. 11A, the fixing tape 240 can be gripped by adhering the fixing tape 240 to the entire circumferential surface of the jig J2, or to a portion of the outer circumferential surface of the jig J2, through the suction force generated via the holes. For example, the inner surface of the fixing tape 240 in contact, or close contact, with the jig J2 may be non-adhesive, while the outer surface of the fixing tape 240 may have adhesive properties due to the application of an adhesive or the like. In addition, by inserting the jig J2, in the state shown in FIG. 11A, into the winding core portion of the electrode assembly 200, removing the suction force to release the fixing tape 240 from the jig J2, and, when necessary, bringing the outer surface of the fixing tape 240 into contact with the separator 230, the outer surface of the fixing tape 240 can be attached to the separator 230.

According to an example embodiment of the present disclosure, by using a fixing tape to fix a separator at a winding core portion to an inner surface of a cylindrical electrode assembly, the separator can be substantially prevented from crossing the winding core portion and causing obstructions in subsequent processes. In addition, by using a porous fixing tape to fix the separator, the decrease in impregnation property of the electrode assembly caused by the fixing tape can be reduced or suppressed. In particular, by partially attaching an end portion of the separator with the porous fixing tape, the decrease in the impregnation property of the electrode assembly can be further reduced or suppressed.

However, it is appreciated by persons skilled in the art that the effects that can be achieved through the present disclosure are not limited to what has been described hereinabove, and other advantages of the present disclosure are better understood from the following detailed description.

While the above disclosure has been described with reference to the example embodiments illustrated in the accompanying drawings, it should be understood that the disclosure is not limited to the disclosed example embodiments, but is intended to cover various modifications and equivalent arrangements included within the sprit and scope of the appended claims.

Accordingly, the scope of the present disclosure shall be determined only according to the attached claims.

### Reference Sign List:

- 1: Housing of battery pack
- 2: Battery
- 11: Housing body of battery pack
- 12: Cover of housing
- 100: Case (battery case)
- 110: Side wall part of the case
- 120: Bottom part of the case
- 130: Opening at upper end of case
- 140: Beading part of the case
- 150: Crimping part of the case
- 200: Electrode assembly
- 201: First insulating plate (upper side)
- 202: Second insulating plate (lower side)
- 210: First electrode plate (positive electrode)
- 220: Second electrode plate (negative electrode)
- 230: Separator
- 240: Fixing tape (general identifier)
- 240a: Fixing tape assembly with two tapes (upper and lower)
- 240a1: Upper fixing tape (crosses upper end of separator)
- 240a2: Lower fixing tape (crosses lower end of separator)
- 240b: Fixing tape assembly with three tapes (upper, lower, and intermediate)
- 240b1: Upper fixing tape
- 240b2: Lower fixing tape
- 240b3: Intermediate fixing tape
- 240c: Fixing tape applied vertically along separator end
- 300: Cap assembly
- C: Central axis of the cylindrical case/electrode assembly
- E1: First electrode tab (connects positive electrode to cap assembly)
- E2: Second electrode tab (connects negative electrode to case)
- G: Gasket
- H, H1-H3: Holes
- J1: Jig with clip structure
- J1a: First clip portion of jig J1
- J1b: Second clip portion of jig J1
- J2: Jig with suction structure
- L: Line representing short side/end edge of separator
- A: Winding core

## Claims

1. An electrode assembly (200) with a cylindrical shape formed by winding a stack multiple times to create a winding core (A) with:
a separator (230) interposed between a positive electrode (210) and a negative electrode (220),
the electrode assembly (200) comprising a fixing tape (240) configured to fix the separator (230) exposed at the winding core (A) to an inner surface of the electrode assembly (200).

2. The electrode assembly (200) of claim 1, wherein the fixing tape (240) comprises an electrically insulating film.

3. The electrode assembly (200) of claim 2, wherein the electrically insulating film comprises at least one of a polyimide (PI)-based resin, a polyethylene (PE)-based resin, or a polyester (PET)-based resin.

4. The electrode assembly (200) according to any of the previous claims, wherein the fixing tape (240) comprises a porous film.

5. The electrode assembly (200) of claim 4, wherein the porous film comprises a base film with a plurality of holes (H) formed therein.

6. The electrode assembly (200) of claim 5, wherein an area occupied by the plurality of holes (H) ranges from 10% to 90% of an area of the base film.

7. The electrode assembly (200) according to claims 5 or 6, wherein the plurality of holes (H) are substantially uniform in size and are regularly arranged on a substantially entire surface of the base film.

8. The electrode assembly (200) according to claims 5 or 6, wherein the plurality of holes (H) are non-uniform in size, and irregularly arranged, on the substantially entire surface of the base film.

9. The electrode assembly (200) according to any of claims 5 to 8, wherein a planar shape of at least one of the plurality of holes (H) is one of circular (H1), elliptical, and polygonal (H2, H3).

10. The electrode assembly (200) according to any of the previous claims, wherein the fixing tape (240) comprises an upper fixing tape (240a1, 240b1) and a lower fixing tape (240a2, 240b2), which are respectively attached to an upper side and a lower side of the separator (230) to cross an end portion of the separator (230).

11. The electrode assembly (200) of claim 10, wherein the fixing tape (240) further comprises one or more intermediate fixing tapes (240b3) attached between the upper fixing tape (240b1) and the lower fixing tape (240b2).

12. The electrode assembly (200) according to any of the previous claims, wherein the fixing tape (240) is attached along an end portion of the separator (230).

13. A method for manufacturing an electrode assembly (200), preferably the electrode assembly (200) configured according to any of the previous claims, the method comprising:
preparing a stack in which a separator (230) is interposed between a positive electrode (210) and a negative electrode (220);
gripping one end portion of the separator (230) and winding the stack multiple times to form the electrode assembly (200) with a cylindrical shape;
bringing the separator (230) exposed at a winding core (A) of the electrode assembly (200) in contact with an inner surface of the electrode assembly (200); and
inserting a fixing tape (240) into the winding core (A), and fixing the separator (230), which is in contact with the inner surface of the electrode assembly (200), with the fixing tape (240).

14. A battery (2) comprising:
a cylindrical case (100); and
an electrode assembly (200) according to any one of claims 1 to 12.
